(19) Europäisches Patentamt

European Patent Office

Office européen des brevets

(11) Veröffentlichungsnummer : **0 081 714**
**B1**

(12) **EUROPÄISCHE PATENTSCHRIFT**

(45) Veröffentlichungstag der Patentschrift :
22.10.86

(21) Anmeldenummer : 82110884.2

(22) Anmeldetag : 24.11.82

(51) Int. Cl.⁴ : **G 03 B 7/24, G 03 B 42/02, G 03 B 7/00**

(54) **Vorrichtung zur Überwachung der Beschaffenheit, insbesondere des Belichtungszustandes, von in Planfilmkassetten befindlichem Filmmaterial für Planfilmkameras o.dgl.**

(30) Priorität : 03.12.81 DE 3147956

(43) Veröffentlichungstag der Anmeldung :
22.06.83 Patentblatt 83/25

(45) Bekanntmachung des Hinweises auf die Patenterteilung : 22.10.86 Patentblatt 86/43

(84) Benannte Vertragsstaaten :
AT CH FR IT LI

(56) Entgegenhaltungen :
EP-A- 0 039 492
DE-A- 2 929 982
FR-A- 1 506 954
US-A- 4 173 401

(73) Patentinhaber : Stigloher, Anton
Mesnerweg 4
D-8011 Hohenbrunn (DE)

(72) Erfinder : Stigloher, Anton
Mesnerweg 4
D-8011 Hohenbrunn (DE)

(74) Vertreter : Kern, Wolfgang Dipl.-Ing. et al
Patentanwälte Tischer, Kern & Brehm Albert-Ross-haupter-Strasse 65
D-8000 München 70 (DE)

Jouve, 18, rue St-Denis, 75001 Paris, France

## Beschreibung

Die Erfindung betrifft eine Vorrichtung an einer Planfilm- oder Röntgenkamera zur Überwachung des Belichtungszustandes von in Planfilm- oder Röntgenfilmkassetten befindlichem Filmmaterial gemäß dem Oberbegriff des Anspruchs 1.

Der Benutzer von Planfilmkassetten, die insbesondere für Planfilmkameras verwendet werden sollen, sieht sich dem Problem gegenüber, die Filmkassetten, die für eine Mehrfachbenutzung vorgesehen werden, zu beschriften oder mit geeigneten Identifizierungzeichen zu versehen, welche den Belichtungszustand des Planfilms kenntlich machen und außerdem Hinweise über das aufgenommene Objekt und dessen Zugehörigkeit enthalten, um Fehlbedienungen bzw. -belichtungen auszuschalten. Unter Mehrfachbenutzung bzw. Mehrfachbelichtung ist ein Vorgang zu verstehen, bei dem ein Planfilm bei der Aufnahme von meist unbewegten Objekten mehrmals belichtet wird, indem beispielsweise bei zu schwachem Blitzlicht der Verschluß mehrmals mit je einem Blitz geöffnet wird. Solche Aufnahmen sind auf allen Gebieten möglich. In diesen Fällen wird die Kassette nur einmal eingeschoben und nur der Verschluß mehrmals betätigt. Dazu ist darauf hinzuweisen, daß in der Röntgenschirmbildphotographie in der Regel Übersichtsaufnahmen und Zielaufnahmen auf ein und demselben Film üblich sind, wozu die Kassette oftmals auch mehrfach belichtet werden muß.

Dies bedeutet, daß die bereits belichtete Kassette zunächst beiseite gelegt wird und zu einem späteren Zeitpunkt erneut in die Kamera eingeschoben werden muß. Wenn dann aufgrund von unzureichenden Identifizierungsmerkmalen auf der Kassette selbst eine Kassettenverwechslung erfolgt, läßt sich der Fehler in aller Regel erst später feststellen, wodurch erhebliche Verluste an Zeit und Kosten entstehen. Darüberhinaus ist die Angabe des Blendenwertes, der Verschlußzeit, des Datums und der Uhrzeit der ersten Belichtung auf der Kassette selbst zur Identifizierung des Zustandes des in ihr befindlichen Planfilmes zeitaufwendig und mit erheblichen Fehlerrisiken behaftet.

Es sind nun zwar Filmempfindlichkeitskennzeichnungen an Filmpatronen oder Filmkassetten bekannt, wobei die Filmempfindlichkeit von der Kamera automatisch abgetastet bzw. eingestellt wird, jedoch läßt sich die hierbei verwendete streifenförmige, photoelektrische abtastbare Kennzeichnungsmarkierung zur Angabe der Filmempfindlichkeit auf der Umfangsfläche der Filmpatronen nicht zur Lösung des obigen Problems einsetzen, da durch die Kennzeichnungsmarkierung nur Angaben über den Zustand eines unbenutzten Filmes bezüglich seiner Empfindlichkeit von der Kamera erhalten werden, jedoch nicht bereits benutzte Filme identifiziert werden können. Einen ähnlichen Stand der Technik zeigt die DE-AS-1 522 042. Auch hier wird eine Filmkassette beschrieben, die eine die Empfindlichkeit des verwendeten Films kennzeichnende Markierung in Form einer von der Kassette getragenen reflektierenden Fläche aufweist, die beim Einsetzen der Kassette in die Kamera den Belichtungsmesser der Kamera dadurch steuert, daß sie den von der reflektierenden Fläche reflektierten Lichtstrahl auf den lichtempfindlichen Empfänger des Belichtungsmessers wirft, wobei das Reflexionsvermögen der reflektierenden Fläche proportional der Empfindlichkeit des in der Kassette befindlichen Films gewählt ist.

Die Aufgabe der Erfindung besteht nun darin, die Vorrichtung der genannten Art so auszubilden, daß mit relativ einfachen technischen Mitteln und bei einfacher Handhabung der Kamera eine Identifizierung von Planfilmkassetten ermöglicht wird, die bereits belichtet worden sind, um eine Verwechslung der Kassette bei Mehrfachbenutzung auszuschließen und gleichzeitig bei der Nachverwendung die kennzeichnenden Daten der Vorverwendung dem Benutzer sichtbar zu machen.

Diese Aufgabe wird gemäß dem Kennzeichen des Anspruchs 1 gelöst.

Vorteilhafte Ausgestaltungen der Erfindung sind in den Unteransprüchen gekennzeichnet.

Durch diese Konstruktion wird durch Anbringung einer spezifischen Kennzeichnung auf den Planfilmkassetten, beispielsweise eines Strichcodes, Magnetstreifens oder E$^2$-PROM, oder auf dem Kassettenschieber bzw. einer anderen beweglichen, gegebenenfalls abnehmbaren Filmabdeckung und durch Auswerten dieser Kennzeichnung beim Einführen der Planfilmkassette in die Kamera eine eindeutige Information gewonnen und mit vorher erhaltenen und eingespeicherten Informationen verglichen, wodurch ein Anzeige- bzw. Meldevorgang ausgelöst wird, der den Benutzer der Planfilmkassette Kenntnis gibt über bestimmte planfilmbezogene Informationen, beispielsweise Anzahl der Probebelichtungen und/oder ordentlichen Filmbelichtungen, benutzte Blenden, Belichtungszeiten, Belichtungsdatum und Uhrzeit.

Dadurch ist dem Benutzer die Möglichkeit der Prüfung gegeben, ob bereits belichtete Kassetten erneut eingesetzt wurden, die eingestellte Belichtungsanzahl bereits gespeichert ist, ohne Filmfreigabe eine Auslösung erfolgt ist und dgl.

Bei gewollter Mehrfachbenutzung ein und derselben Planfilmkassette besteht die Möglichkeit, die vorhandene Sperreinrichtung zu desaktivieren und die Häufigkeit der Benutzung zu registrieren, d. h. zu zählen und im Speicherteil der Überwachungseinrichtung abzuspeichern, wobei der aktuelle Zählerstand auf der Anzeigeeinrichtung sichtbar gemacht werden kann und bei Gleichstand mit einem vorher eingespeicherten Maximalwert jede weitere Betätigung einer eventuell vorhandenen, abschaltbaren Auslösesperre verhindert wird, oder ein Warnsignal ausgesandt wird.

Die Erfindung wird nachfolgend anhand des in der Zeichnung dargestellten Ausführungsbeispiels näher erläutert. In der Zeichnung zeigt:

Figur 1 eine Draufsicht einer Planfilmkamera mit eingeschobener Planfilmkassette,

Figur 2 eine Rückansicht der Kamera von Fig. 1 und

Figur 3 ein schematisches Funktionsbild der erfindungsgemäßen, in der Kamera verwendeten Überwachungsvorrichtung.

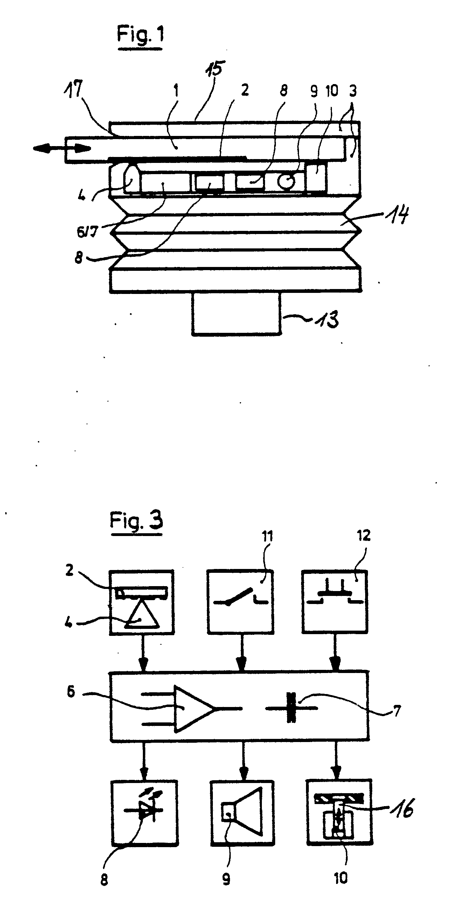

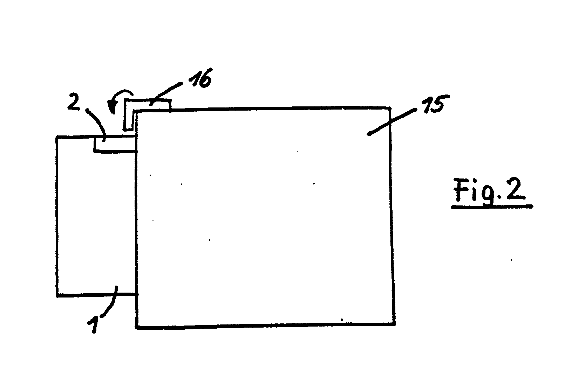

Die Planfilmkamera von Fig. 1 weist in bekannter Weise ein Objektiv 13, einen Faltenbalg 14 und einen Mattscheibenträger 15 auf. Vor dem Mattscheibenträger befindet sich im hinteren Teil 3 der Kamera der Schlitz 17 zum Einschieben einer Planfilmkassette 1, deren Aufbau an sich bekannt ist. Diese Kassette ist für zwei Planfilme vorgesehen und weist auf beiden Seiten einen Codestreifen 2 (Fig. 2) auf, welcher Identifizierungsmerkmale für die Kassette enthält.

Der Codestreifen 2 wird beim Einschieben der Kassette in den Schlitz 17 durch einen Reflexionsabtaster 4, bestehend aus einer Lichtquelle und einer Fotozelle, abgetastet (gelesen). Die abgetastete Information wird einer in der Kamera befindlichen Informationsauswertvorrichtung 6, bestehend aus einem Zwischenspeicher und Vergleicher, und von dieser Auswertvorrichtung einem ebenfalls in der Kamera befindlichen Endspeicher 7 (Fig. 3) zugeführt. Im Endspeicher 7 wird bei erstmaliger Belichtung der Kassette deren vom Reflexionsabtaster gelesene Identifizierungsdaten der Belichtungszeitpunkt (Uhrzeit und Datum), die Belichtungszeit, der Blendenwert sowie bei mehrfacher Belichtung deren Anzahl gespeichert. In der Informationsauswertvorrichtung wird die gelesene Code-Information zunächst zwischengespeichert und dann im Vergleicher mit den im Endspeicher gespeicherten Code-Informationen verglichen, um festzustellen, ob die Kassette schon einmal oder ggf. schon mehrmals belichtet worden ist.

Ferner enthält die Kamera eine optische Anzeige (Display) an sich bekannter Bauart, über die die im Endspeicher gespeicherten Informationen über die eingeschobene Kassette dem Kamerabenutzer optisch mitgeteilt werden. Dadurch kann er unmittelbar nach dem Einschieben der Kassette feststellen, ob diese Kassette derjenigen entspricht, die benutzt werden soll, oder ob eine andere eingeschoben wurde. Letzteres ist bei Mehrfachbelichtungen von Planfilmen, bei denen die Kassetten zwischendurch aus der Kamera entfernt und beiseite gelegt werden, um zu einem späteren Zeitpunkt wiederholt belichtet zu werden, von größter Bedeutung, um unerwünschte Belichtungen anderer Kassetten zu vermeiden. Darüber hinaus lassen sich dann, wenn die Kassette aus der Kamera genommen worden ist, mit Hilfe einer in der Zeichnung nicht dargestellten Tastatur die im Endspeicher 7 gespeicherten Informationen, betreffend die herausgenommene Kassette, abfragen und auf der optischen Anzeige 8 der Kamera sichtbar machen.

Wird nun die Kamera nach dem Entfernen einer Kassette mit einer weiteren oder neuen Kassette beschickt, so wird, wie oben erwähnt, deren am oberen Kassettenrand befindlicher Codestreifen 2 von dem Reflexionsabtaster 4 abgetastet und die abgetasteten Informationen in Form von Signalen über die Informationsauswertvorrichtung 6 in dem Endspeicher 7 gespeichert. Danach wird der Filmabdeckschieber aus der Kassette herausgezogen und der Planfilm in der gewünschten Weise belichtet, nachdem Blende und Belichtungszeit eingestellt worden sind. Diese Einstellungen werden über ein kamerageeignetes Signalsystem ebenfalls in den Endspeicher 7 übertragen und den schon im Speicher befindlichen Kassetten-Identifizierungsdaten hinzugefügt.

Nachdem der Filmabdeckschieber herausgezogen worden ist, findet im Normalfall die erste Auslösung bzw. Belichtung statt. Ein weiterer Auslöseversuch kann durch eine ggf. vorhandene Auslösesperre verhindert werden. Falls nun bewußt mehrere Belichtungen hintereinander stattfinden sollen, kann von dem Benutzer vorher ein an der Kamera vorhandenes, in der Zeichnung nicht dargestelltes Zählwerk eingestellt werden, das nach Erreichen der gewünschten Auslöseanzahl die Auslösesperre aktiviert. Die Anzeige 8 zeigt die Auslösezahl optisch an.

Daraufhin wird der Filmabdeckschieber wieder in die Kassette zurückgeschoben, woraufhin die Kassette 1 aus dem Kameraschlitz 17 herausgezogen werden kann.

Nach dem Einschieben einer bereits belichteten Kassette in den Kameraschlitz 17 wird diese Tatsache nicht nur mit der Anzeige 8 angezeigt, sondern auch eine akustische Warnsignaleinrichtung 9 in Gang gesetzt und darüber hinaus eine Filmabdeckverriegelung 10 betätigt, wobei ein durch Magnetkraft festgehaltener Riegel 16 mit Hilfe des elektronischen Warnsignals entriegelt wird, so daß er über den Filmabdeckschieber der eingeschobenen Kassette 1 fällt und das Herausziehen des Schiebers dadurch verhindert. Wie in Fig. 2 dargestellt, fällt in diesem Falle der Sperriegel über die Griffseite der Kassette, wodurch die bereits belichtete Kassette nicht noch einmal belichtet werden kann, bevor nicht die in Fig. 2 schematisch dargestellte Verriegelung manuell wieder aufgehoben wird, um die Kassette aus der Kamera zu entnehmen oder den Schieber des bereits belichteten Planfilms absichtlich zu entfernen und dadurch eine weitere Belichtung des Films zu ermöglichen, falls dies gewünscht werden sollte.

Wie bereits erwähnt, ist die Kamera auch mit einer Eingabe- und Abfrageeinheit 11, 12, bestehend aus einer mit Ziffern oder Symbolen versehenen Tastatur, ausgestattet, wodurch unabhängig von dem auf die Codestreifen 2 ansprechenden Reflexionsabtaster 4 der Endspeicher 7 mit zusätzlichen Informationen beschickt werden kann oder auch ein absichtliches Löschen gespeicherter Informationen zu bestimmten Kassetten bzw. zugehörigen Planfilmen erfolgen kann, falls diese Informationen nicht mehr benötigt werden. Die Abfrageeinheit dient in diesem Zusammenhang zur Abfragung des Speicherinhalts, so daß über die Anzeige 8 optisch leicht festgestellt werden kann, welche Kassetten bereits verwendet worden sind und unter welchen fotografischen Bedingungen (Blende, Verschlußzeit, Datum und Uhrzeit der Belichtung, Anzahl der Belichtungen) dies geschehen ist.

Zusammenfassend sind die mit der erfindungsgemäßen Vorrichtung erreichten Vorteile darin zu sehen, daß die Gefahr einer Verwechselung von Kassetten drastisch reduziert wird, die bewußt vorgenommene Mehrfachbenutzung, insbesondere Mehrfachbelichtung von Planfilmkassetten in gewünschter Weise ermöglicht wird durch die selbständig vorgenommene Überwachung der benutzten Kassetten eine unerwünschte Belichtung vermieden und dadurch eine erhebliche Kosten- und Zeitersparnis ermöglicht wird, daß ferner eine größere Bedienungssicherheit und verbesserte Handhabung der Kamera erreicht wird, und daß schließlich eine automatische Überprüfung von Planfilmkassetten durch bloßes Einsetzen der Kassetten in die Kamera erreichbar ist, ohne daß der Benutzer zusätzliche Handgriffe vorzunehmen hat.

**Patentansprüche**

1. Vorrichtung an einer Planfilm- oder Röntgenkamera zur Überwachung des Belichtungszustandes von in Planfilm- oder Röntgenfilmkassetten befindlichem Filmmaterial, gekennzeichnet durch einen Codestreifen (2) an der Kassette zu deren Identifizierung, durch einen Reflexionsabtaster (4) an der Wandung des die Filmkassette aufnehmenden Schlitzes (17) der Kamera zum Abtasten des Codestreifens, durch eine Informationsauswertvorrichtung (6) mit einem Vergleicher und einem Zwischenspeicher, dem die abgetasteten Code-Informationen zugeführt werden, durch einen Endspeicher (7), der die genannten Informationen sowie die Belichtungsdaten bei Belichtung der Kassette speichert, wobei der Vergleicher die Code-Information der eingeschobenen Kassette mit den im Endspeicher registrierten Code-Informationen vergleicht, um festzustellen, ob die genannte Kassette schon einmal belichtet wurde, und wobei die Anzahl der Belichtungen einer Kassette im Endspeicher registriert wird, und durch eine optische Anzeigevorrichtung (8) zur visuellen Darstellung des Speicherinhalts des Endspeichers (7).

2. Vorrichtung nach Anspruch 1, dadurch gekennzeichnet, daß die optische Anzeigevorrichtung (8) mit einer ein akustisches Warnsignal erzeugenden Einrichtung (9) gekoppelt ist, die bei einem bestimmten Speicherinhalt des Endspeichers (7) zu einer Kassette gleichzeitig mit der optischen Anzeige aktiv wird.

3. Vorrichtung nach Anspruch 1 oder 2, gekennzeichnet durch eine Kassettenschieberverriegelungseinrichtung (10), die bei einem bestimmten Speicherinhalt des Endspeichers (7) zu einer Kassette den Kassettenschieber blockiert sowie die Kassette (1) gegen Herausziehen aus dem Schlitz (17) verriegelt.

4. Vorrichtung nach einem der Ansprüche 1 bis 3, dadurch gekennzeichnet, daß die Informationsauswertvorrichtung (6) an eine Informationseingabevorrichtung (11) angeschlossen ist, durch die weitere einer Kassette zugehörige Informationen in den Endspeicher (7) eingebbar sind.

5. Vorrichtung nach einem der Ansprüche 1 bis 4, gekennzeichnet durch eine mit der Informationsauswertvorrichtung (6) verbundene Abfrageeinheit (12), mit der in dem Zwischenspeicher bzw. Endspeicher (7) vorhandene Informationen abgefragt und auf der Anzeigevorrichtung (8) sichtbar gemacht werden können.

**Claims**

1. System in a plate-film camera or röntgen-camera for checking the exposure status of a film material contained in plate-film cartridges or röntgen-film-cartridges, characterized by a code strip (2) on the cartridge for its identification by a reflection sensor (4) on the wall of the film cartridge receiving slot (17) of the camera for sensing the code strip, by an information evaluating means (6) comprising a comparator and an intermediate storage receiving the sensed code information, by an ultimate storage (7) storing the said information as well as the exposure dates on exposing the cartridge, wherein the comparator compares the code information of the put-in cartridge with the code information registered in the ultimate storage in order to find out whether the said cartridge has already been exposed, and wherein the number of the exposures of a cartridge is registered in the ultimate storage, and by an optical indication means (8) for visually representing of the storage content of the ultimate storage (7).

2. System according to claim 1, characterized in that the optical indicating means (8) is connected to an apparatus (9) delivering an acoustical warning signal, which apparatus will be activated simultaneously with the optical indication in case of a definite storage content of the ultimate storage (7) for a cartridge.

3. System according to claim 1 or 2, characterized by a cartridge slide locking means (10) locking in case of a definite storage content of the ultimate storage (7) for a cartridge the cartridge slide as well as locking the cartridge (1) against withdrawal out of the slit (17).

4. System according to one of the claims 1-3, characterized in that the information evaluating means (6) is connected to an information input means (11) through which further information relating to a cartridge can be put into the ultimate storage (7).

5. System according to one of the claims 1-4,

characterized by a checking unit (12) connected to the information evaluating means (6), by which information which are present in the intermediate storage or ultimate storage (7, respectively) may be controlled and may be made visuable on the indicating means (8).

## Revendications

1. Dispositif pour appareils photographiques à pellicule plane ou appareils radiographiques, destiné à la surveillance de l'état d'exposition de la pellicule dans sa cassette, caractérisé par une bande codée (2) disposée sur la cassette en vue de son identification, par un détecteur optique (4) situé sur la paroi de la fente (17) d'introduction des cassettes dans l'appareil, dans le but de lire la bande codée, par un dispositif (6) d'évaluation des informations comportant un comparateur et une mémoire intermédiaire auxquels sont transmises les données codées lues par le détecteur par une mémoire finale (7) qui enregistre lesdites informations ainsi que les données d'exposition en cas d'expositions de la cassette, le comparateur comparant les informations codées de la cassette introduite dans l'appareil aux données codées enregistrées dans la mémoire finale, en vue de contrôler si la cassette en question a déjà été exposée, la mémoire finale enregistrant le nombre d'exposition de la cassette, et par un système optique d'affichage (8) donnant une image visuelle du contenu de la mémoire finale (7).

2. Dispositif selon la revendication 1, caractérisé en ce que le système optique d'affichage (8) est couplé avec un dispositif (9) produisant un signal d'avertissement acoustique et devenant actif en même temps que l'affichage optique pour un contenu donné de la mémoire finale (7) relatif à la cassette en place dans l'appareil.

3. Dispositif selon l'une quelconque des revendications 1 ou 2, caractérisé par un système de verrouillage (10) du volet obturateur de la cassette, qui bloque ce volet pour un contenu donné de la mémoire finale (7) relatif à la cassette en place dans l'appareil et empêche également d'extraire la cassette (1) par la fente d'introduction (17).

4. Dispositif selon l'une quelconque des revendications 1 à 3, caractérisé en ce que le dispositif (6) d'évaluation des informations est connecté à un dispositif d'entrée de données (11) qui permet d'enregistrer dans la mémoire finale (7) des données complémentaires relatives à la cassette.

5. Dispositif selon l'une quelconque des revendications 1 à 4, caractérisé par un dispositif (6) d'évaluation des informations relié à une unité de consultation (12) qui permet de consulter les informations disponibles dans la mémoire intermédiaire ou dans la mémoire finale (7) et de les faire apparaître sur le système optique d'affichage (8).

Fig. 1

Fig. 3

Fig. 2